# EUROPEAN PATENT SPECIFICATION

(11) **EP 1 214 766 B1**
(45) Date of publication and mention of the grant of the patent: **09.07.2003**
(21) Application number: 00965958.2
(22) Date of filing: 04.09.2000
(51) Int. Cl.: H02B 13/075

(54) **SWITCHGEAR DEVICE WITH GROUNDING UNIT**
SCHALTANLAGE MIT ERDUNGSVORRICHTUNG
DISPOSITIF DE COMMUTATION AVEC UNITE DE MISE A LA TERRE

(30) Priority: 17.09.1999 IT MI991937
(43) Date of publication of application: 19.06.2002
(73) Proprietor: ABB Service S.r.l., 20135 Milano (IT)
(72) Inventor: PIAZZA, Costante, I-26900 Lodi (IT); SFONDRINI, Libero, I-26900 Lodi (IT); SCIACCA, Aldo, I-20097 San Donato Milanese (IT); GRANATA, Carlo, I-26824 Cavenago d'Adda (IT); BOATTINI, Fulvio, I-20090 Trezzano sul Naviglio (IT); PAROLINI, Alessandro, I-20040 Bellusco (IT)
(74) Representative: Giavarini, Francesco
(86) International application number: EP0008841
(87) International publication number: WO01022547

(56) References cited:
- EP-A- 0 196 240
- DE-A- 3 834 945
- DE-A- 19 648 643
- US-A- 5 796 060

## Description

The present invention relates to a gas-insulated switchgear device for high- and medium-voltage applications, having improved functions and characteristics. In particular, the device according to the invention, by virtue of its innovative structure, allows to optimize execution of the required electric maneuvers, according to a solution which is at the same time simple, effective and compact. It is known from the art that electric maneuvers, for both interruption and disconnection, in gas-insulated circuit breaker and disconnector units are provided by virtue of the translatory motion of one or more moving contacts which can couple/uncouple with respect to corresponding fixed contacts. A significant drawback of known types of devices is the fact that the various switching operations, for example for disconnection on the input line or on the output line, are performed by means of dedicated components which are structurally separate and mutually distinct; in this way, the number of components used to implement the various switching operations is large and entails an increase in the space occupation and total volume of the device, with a consequent cost increase. Furthermore, the contacts are moved by using actuation devices which comprise actuators of the mechanical or hydraulic type, which generally require complicated kinematic systems for transmitting motion to the moving contact with complicated coupling mechanisms and/or complicated actuation and control systems.

Another drawback is the fact that line grounding entails the use of additional separate components which are generally manually actuated and therefore force the direct intervention of operators at the installation side and prevent remote control. Furthermore, it is necessary to provide particular devices and refinements, which are not free from drawbacks, to contrast the electrodynamic stresses caused by short-circuit conditions, which tend to separate the device from the line and damage the devices.

In view of the mechanical complexity of the movement elements and of the large number of components used, maintenance interventions are necessary in order to maintain nominal behavior and therefore ensure repeatability of performance.

Such gas- insulated switchgear devices are known from documents US-A- 5 796 060 and EP-A-0 196 240.

The aim of the present invention is to provide a gas-insulated switchgear device in which the electrical maneuvers, particularly for grounding a line which is connected in output to the device itself, occur in a simple and easily controllable manner.

Within the scope of this aim, an object of the present invention is to provide a gas-insulated switchgear device in which grounding of the output line of the device is ensured even in the presence of electrodynamic stresses caused for example by short-circuit conditions.

Another object of the present invention is to provide a gas-insulated switchgear device which has a reduced mechanical complexity and a simplified structure with respect to devices of the known art.

Another object of the present invention is to provide a gas-insulated switchgear device in which switching for grounding an output line of the device can be performed without the direct intervention of operators.

Another object of the present invention is to provide a gas-insulated switchgear device which has compact dimensions and space occupation.

Another object of the present invention is to provide a gas-insulated switchgear device which is highly reliable, relatively easy to manufacture and at competitive costs.

This aim, these objects and others which will become apparent hereinafter are achieved by a gas-insulated switchgear device, comprising at least an input bar and an output bar which are positioned inside two corresponding bushings, an enclosure which contains an interruption unit and a disconnection unit which are electrically connected to each other and, respectively, to the input bar and to the output bar, characterized in that it comprises a grounding unit for grounding said output bar, said grounding unit having electrical and mechanical coupling means which are associated with the output bar, and contact means movable between a first position in which they are disconnected from said coupling means and the output bar is energized, and a second position in which they are connected to the coupling means and the output bar is grounded, said contact means being operatively controlled by actuation means which are suitable to supply the energy required for movement.

The device according to the invention can be of the segregated-phase or joined-phase type, for a single-bar system and for a multiple-bar system, with single-or three-pole actuation.

In the device according to the invention, the maneuver for grounding the output bar therefore occurs by using a unit which is integrated in the device itself, according to a solution which is at once simple, effective, compact and cheap.

Another advantage of the device according to the invention is the fact that by comprising a disconnection unit, an interruption unit and a grounding unit, in practice it constitutes a complete and prefabricated module which can be easily transported to the installation site.

The invention concerns also by gas-insulated switchgear device comprising the features of claim 15.

Further advantages of the invention will become apparent from the description of some preferred but not exclusive embodiments of a switchgear device according to the invention, illustrated only by way of non-limitative example in the accompanying drawings, wherein:
Figure 1 is a view of an embodiment of a gas-insulated switchgear device for a single-bar system and single-pole actuation according to the invention;
Figure 2 is a view of an embodiment of a gas-insulated switchgear device for a two-bar system and single-pole actuation according to the invention;
Figure 3 is a detail view of a grounding unit of the output bar, which can be used in the device according to the invention, in a condition in which the output bar is live;
Figure 4 is a detail view of a grounding unit of the output bar, which can be used in the device according to the invention, in a condition in which the output bar is grounded;
Figure 5 is a detail view of a guide provided with a slot used in the grounding unit of Figures 3 and 4;
Figure 6 is a view of a pivot used in the grounding unit of Figures 3 and 4;
Figure 7 is a schematic view of an alternative embodiment of a grounding unit for the output bar, which can be used in the device according to the invention;
Figure 8 is a schematic view of a further alternative embodiment of a grounding unit for the output bar, which can be used in the device according to the invention.

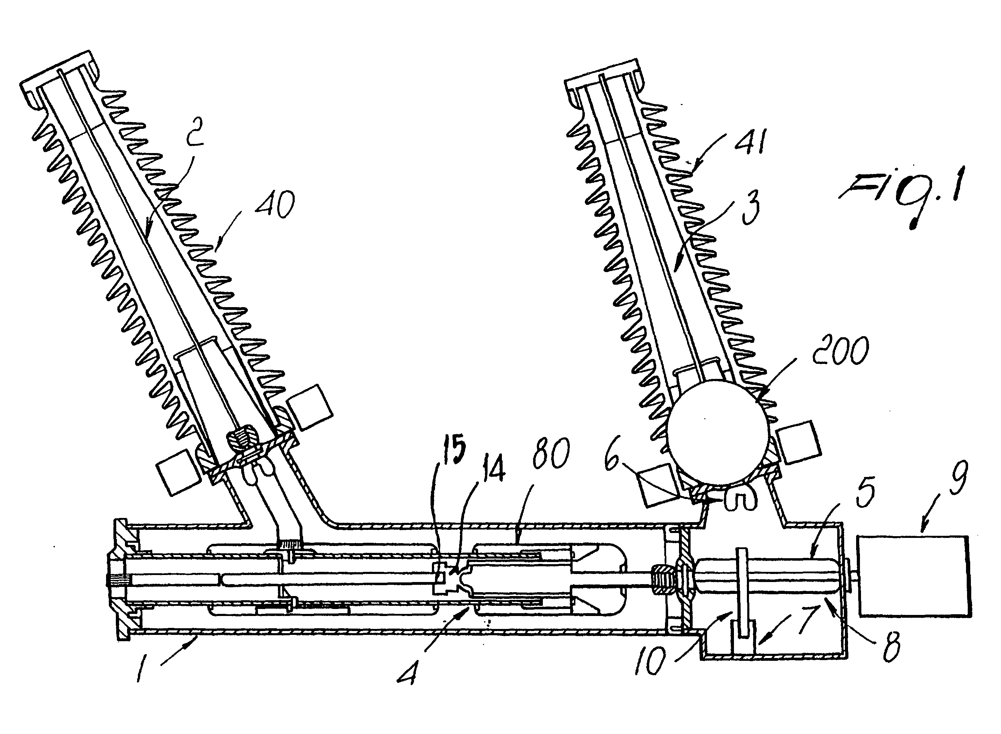

With reference to Figure 1, the device according to the invention comprises an enclosure 1 which has a first conducting bar 2 which is accommodated in a first bushing 40 and a second conducting bar 3 which is accommodated in a second bushing 41. The bars 2 and 3 are electrically connected in input/output to/from the device, for example, with a power line; alternatively, they could be connected to other electrical devices with different arrangements and according to several applications.

The enclosure 1, which contains an insulating gas, accommodates an interruption unit 4 and a disconnection unit 5 which are connected electrically to each other and, respectively, to the input bar 2 and to the output bar 3, in the manner described in greater detail hereinafter.

Advantageously, the device according to the invention is provided with a grounding unit 200 for the output bar 3; the grounding unit 200 is advantageously positioned inside the bushing 4 in correspondence of its base, and comprises mechanical and electrical coupling means which are associated with the output bar 3 and contact means which can move between a position for disconnection with respect to said coupling means, in which the output bar 3 is live, and a position for connection to the coupling means, in which the output bar 3 is grounded. The unit 200 furthermore comprises actuation means operatively connected to the contact means which supply the energy required for their movement.

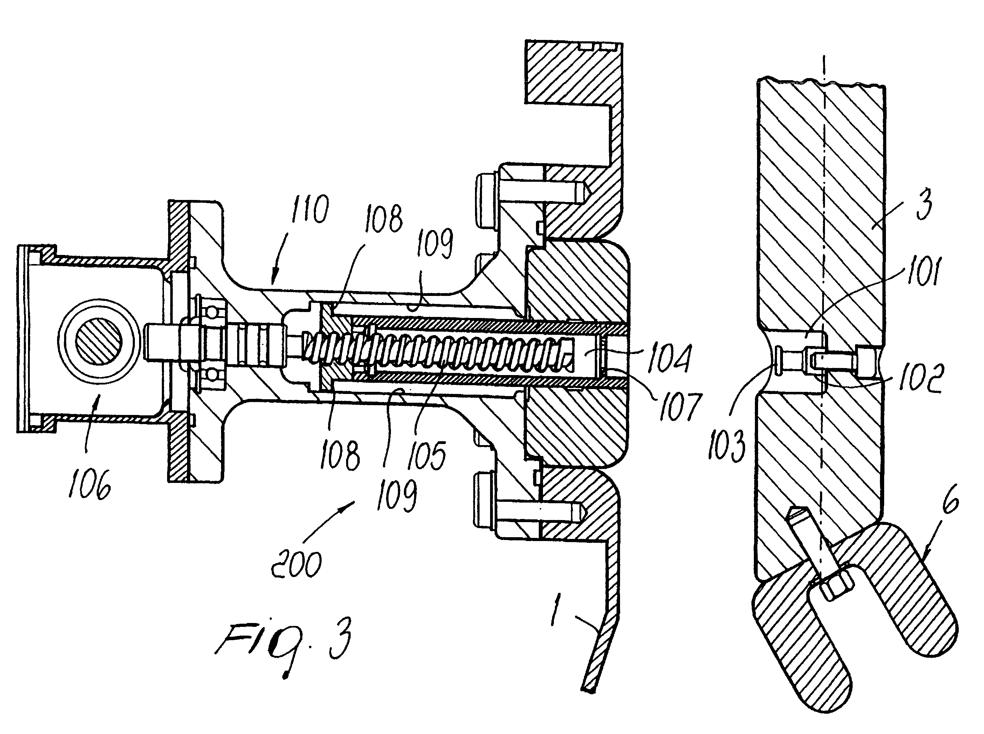

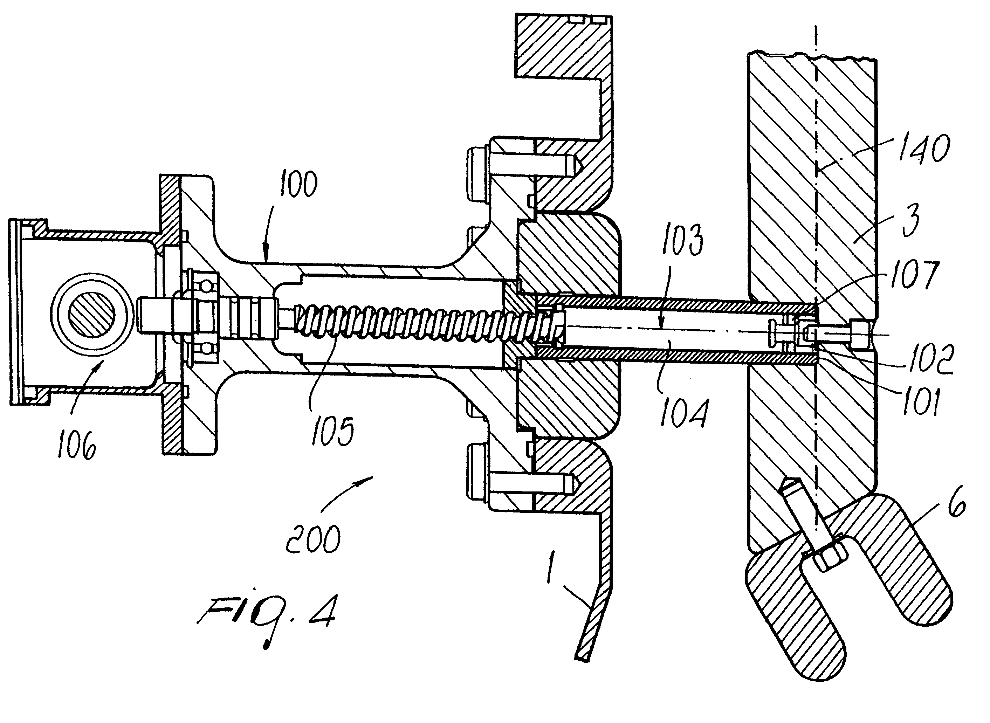

According to a particularly preferred embodiment, shown in detail in Figures 3 and 4, the means for electrical and mechanical coupling to the output bar 3 comprise a hollow seat 101 formed in the body of the bar 3 inside which there is a pivot 102; in particular, the pivot 102, shown in detail in Figure 6, has a shaped head 103 which is suitable to facilitate connection with the contact means in the manner described hereinafter.

The contact means comprise a conducting body 104 which is substantially tubular and is operatively controlled by actuation means; in the illustrated embodiment, said actuation means comprise a screw mechanism 105 which operatively connects the tubular body 104 to an actuator 106, for example an electric motor. Alternatively, it is possible to use other types of actuation means, so long as they are compatible with the application.

A raised portion 107 is provided on the inner surface of the tubular body 104 and forms an opening which is suitable to facilitate the passage of the shaped head 103 inside the tubular body 104 and its subsequent coupling to said tubular body; in particular, the electric motor 106 actuates the screw mechanism 105, which in turn transmits the motion to the conducting body 104; the conducting body 104 moves, starting from the position shown in Figure 3, and enters with its end portion in the seat 101, as shown in Figure 4. Advantageously, on the outer surface of the tubular body 104 there are also multiple flexible laminas of the type which is known in the art, not shown for the sake of simplicity in description; in this manner, when the body 104 enters the seat 101, the flexible laminas electrically couple to the walls of the hollow seat 101, allowing to ground the output bar 3. Furthermore, by virtue of the use of the motor it is possible to perform the maneuver for grounding by means of a remote control, therefore without the direct intervention of operators at the installation site. As a further advantage, the possibility to remotely control the intervention allows to provide coordinated intervention strategies with automatic sequences, for example for disconnection, among the various devices. It is in any case possible to use, together with motorized actuation, manual actuations so as to ensure greater safety.

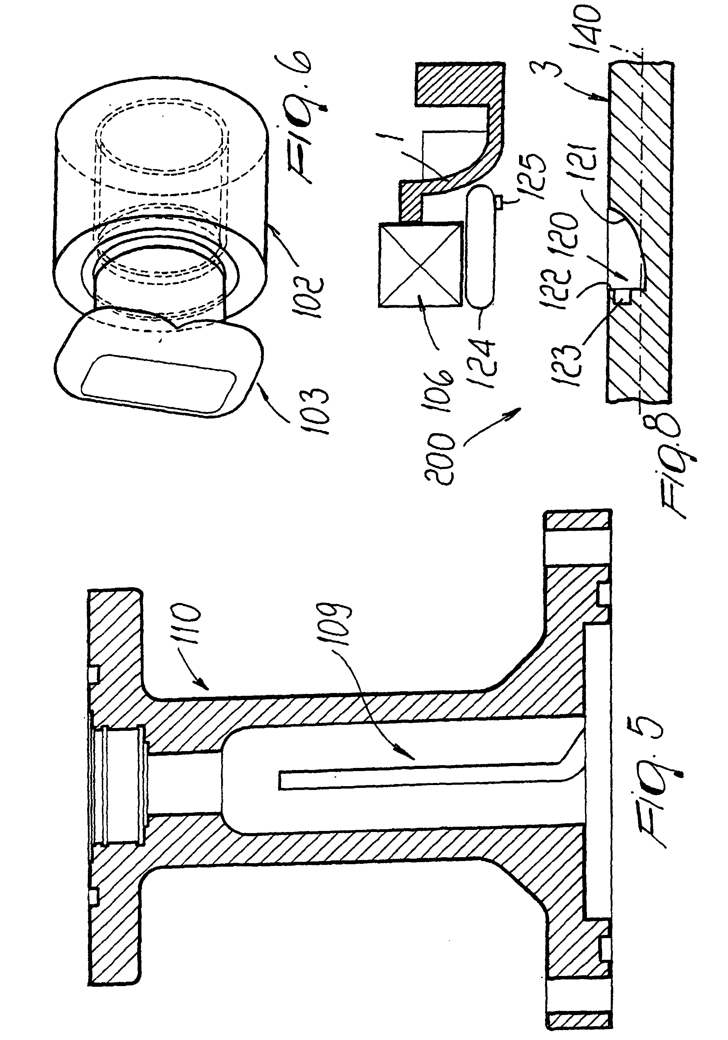

Furthermore, during insertion in the seat 101, the head 103 of the pivot passes, through the opening formed by the raised portion 107, inside the tubular body 104. Advantageously, on the outer surface of the tubular body 104 there are two pawls 108, each of which runs in a corresponding slot 109 formed in a guide 110 which is associated with the enclosure 1. In particular, as shown in Figure 5, the slots 109 have a first portion with a straight axis and a final portion with a curved axis; in this manner, when the head of the pivot 102 has passed through the opening, the pawls 108 slide in the curved portion of the slots 109 and produce a rotation of the tubular body 104. Accordingly, the head 103 of the pivot is offset with respect to the perimeter of the opening and can couple geometrically to the rear walls of the raised portion 107. In this manner, a geometric coupling with a substantially interlocking mating occurs between the tubular body 104 and the pivot 102; this mating ensures resistance to the electrodynamic stresses that tend to extract the body 104 from the bar 3 with a constructive solution which is simple, compact and effective.

According to an alternative embodiment of the device according to the invention, not shown, the mechanical connection between the parts can be achieved by forming a protruding pawl on the head of the pivot 102; in this case, on the inner surface of the tubular body 104 there is a slot which has at least one portion which has a curved axis, as described above for the slots 109. In this manner, the pawl formed on the head of the pivot enters the slot and, by sliding in the portion that has a curved axis, produces a rotation of the tubular body 104 and its interlocking coupling to the pivot 102.

According to another embodiment of the device according to the invention, the coupling means comprise a hollow seat 101 which is formed in the body of the output bar 3 and inside which there is a pivot, as described above. In this case, the pivot has a substantially cylindrical threaded body, and correspondingly the internal surface of the tubular body 104 is at least partially threaded. Accordingly, when the tubular body 104 enters the seat 101, the pivot screws into it, providing the mechanical coupling between the two parts.

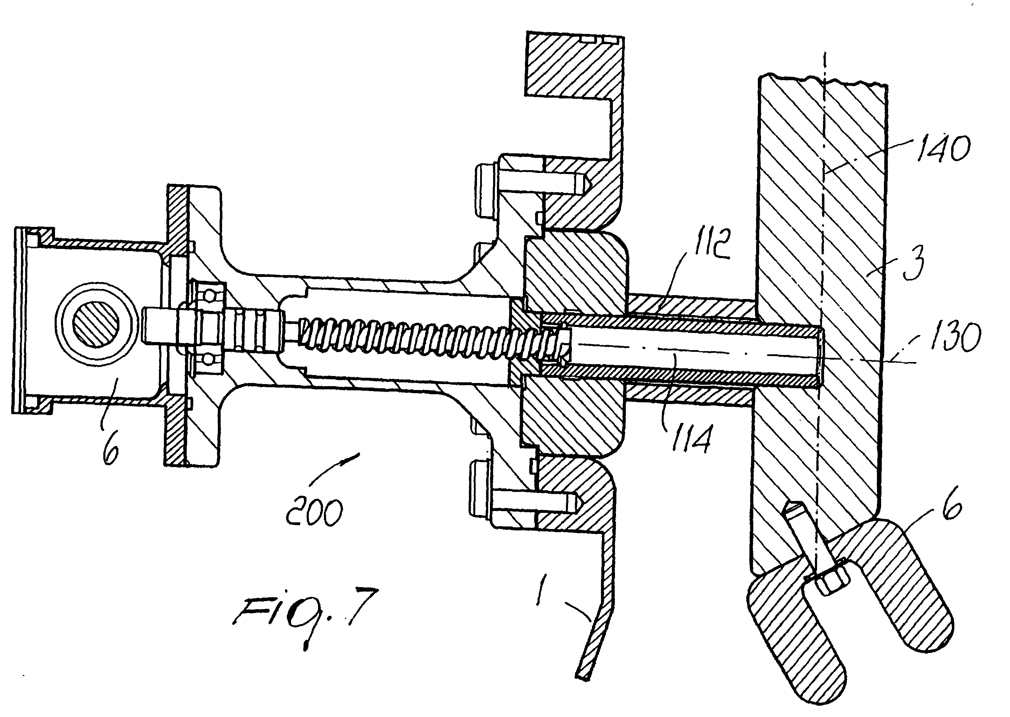

According to another embodiment, schematically shown in Figure 7, the coupling means comprise a hollow seat 101, which is formed in the body of the output bar 3, and an insulating tubular element 112, which has a first end which is fixed to the enclosure 1 and a second end which is fixed to the bar 3 at the edges of the seat 101. In this case, the contact means comprise an elongated conducting body 114 which is for example substantially equal in shape to the tubular body 104 described earlier. The conducting body 114 slides inside the insulating element 112 and enters the hollow seat 101, so that the flexible laminas arranged on its outer surface couple electrically to the walls of the seat 101. In this case, the interlocking mechanical coupling is ensured by the combined action of the hollow seat 101 and of the insulating element 112.

According to another preferred embodiment, shown schematically in Figure 8, the coupling means comprise a hollow seat 120 which is formed in the output bar 3 and has a side wall 121, provided for example with a curved transverse profile, and a substantially flat base 122 on which a step-shaped cavity 123 is formed. In turn, the contact means comprise an elongated conducting body 124 which can be for example a tubular body which is similar to what has been described above or simply a blade of appropriate shape. The conducting body 124 has a first end which is operatively connected to an electric motor 106 and a second free end which has a protruding tooth 125; in this case, the motor 106 forces a rotation of the body 124, which enters the seat 120 and the tooth 125 enters the cavity 123 and locks therein. In this case also, on the outer surface of the body 124 there are flexible laminas which electrically couple to the walls of the seat 120; the enclosure 1 can furthermore be configured appropriately in order to electrically shield the conducting body 124.

Another advantage of the device according to the invention resides in the fact that in all the above described solutions, in correspondence of the position in which the output bar 3 is grounded, i.e., when the conducting body (104, 114, 124) is electrically connected to the bar 3, the angle formed between the axis 130 of the conducting body and the axis 140 of the output bar is between 45° and 135°, preferably between 60° and 120°, more preferably between 80° and 100°. In particular, as shown in Figure 4, said angle is approximately 90°; in this manner one obtains an optimum solution as regards space occupation and insulations to be ensured.

As shown in Figure 1, the disconnection unit 5 comprises a first fixed contact 6 which is connected to the output bar 3 and a second grounded fixed contact 7. In the case of Figure 1, the fixed contact 7 is connected to the enclosure 1, which is grounded. The disconnection unit 5 comprises an operating element, preferably a rotating shaft 8, which is moved by actuation elements which are represented schematically by the device 9, which can be for example an appropriately controlled electric motor.

A first moving contact 10, which is electrically connected to the interruption unit 4, is fixed to the shaft 8 and rotates rigidly with it. In the embodiment of Figure 1, the moving contact 10 is constituted by a blade which has a sector-like profile and is keyed on the shaft 8. The moving contact 10 and the fixed contacts 6 and 7 are arranged so that the ends of said fixed contacts lie on the plane traced by the rotation of the end of the moving contact 10. In this case, the disconnecting operation is performed by turning the shaft 8; accordingly, the moving contact 10 rigidly coupled thereto couples to the fixed contact 6 or 7, thus providing the line or ground connection, respectively. In Figure 1, the moving contact 10 is coupled to the fixed contact 7; the ground connection is therefore closed, while the output connection is open.

According to an alternative embodiment, not shown, it is possible to have two moving contacts which are fixed to the shaft 8; each one of said moving contacts can be coupled to a corresponding fixed contact. In this case, the fixed contact 6 lies on the rotation plane of one of the two moving contacts that can be coupled thereto, while the fixed contact 7 lies on the rotation plane of the other moving contact that can be coupled thereto. Furthermore, the two moving contacts are fixed to the shaft 8 in such a relative angular position that they cannot be simultaneously coupled to the fixed contacts 6 and 7. In this manner, by virtue of the rotation of the shaft 8 one obtains, for example, the uncoupling between the fixed contact 6 and the first moving contact and then the coupling between the fixed contact 7 and the second moving contact, thus providing ground disconnection. It is possible to proceed in a similar manner when one wishes to open the ground disconnection contact and close the line contact.

In turn, the interruption unit 4 has an interruption chamber 80 which accommodates a fixed contact 14 and a moving contact 15, the longitudinal axis of the interruption chamber 80 being substantially aligned with the rotation axis of the operating element 8. In this case, the opening/closing operation of the interruption unit occurs by virtue of the translatory motion of the moving contact of the interruption unit along the longitudinal axis of the device, while switching for disconnection on the output bar side occurs by rotation of the moving contacts of the disconnection unit 5 about said longitudinal axis.

According to a particular embodiment, not shown, the operating element of the disconnection unit is constituted by the enclosure 80 of the interruption chamber. In this case, the moving contacts of the second disconnection unit 5 are keyed on the outer surface of the interruption chamber, which can rotate with respect to the enclosure 1 of the device. Movement is imparted by actuation elements, for example an appropriately controlled electric motor, preferably a servomotor. By using this technical solution, the device according to the invention is particularly compact, since the space occupied by the disconnection unit 5 is distributed inside the enclosure 1 along the interruption chamber.

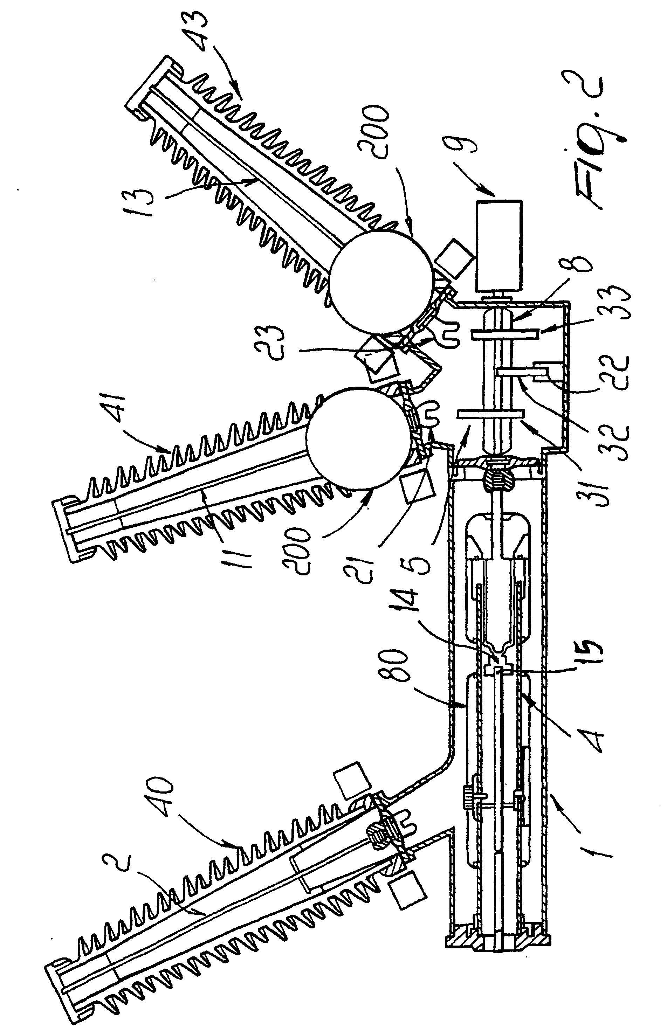

Figure 2 illustrates a gas-insulated switchgear device for a two-bar system. As described above, the device of Figure 2 comprises an enclosure 1 which accommodates an interruption unit 4 and a disconnection unit 5 and contains an insulating gas, a first bushing 40 which accommodates an input bar 2, a second bushing 41 which accommodates a first output bar 11, and a third bushing 43 which accommodates a second output bar 13. In this case, a grounding unit 200 for each one of the output bars 11, 13 is used.

As shown, the disconnection unit 5 comprises a first fixed contact 21 which is connected to the output bar 11, a second grounded fixed contact 22, and a third fixed contact 23 which is connected to the output bar 13; as in Figure 1, the fixed contact 22 is connected to the enclosure 1, which is grounded. The disconnection unit 5 furthermore comprises a first moving contact 31, a second moving contact 32 and a third moving contact 33, which are electrically connected to the interruption unit 4, are fixed to the shaft 8 and rotate rigidly therewith. In this case also, the rotating shaft 8 is moved by actuation elements which are schematically represented by the unit 9, which can be for example an appropriately controlled electric motor.

In the embodiment of Figure 2, the moving contacts 31, 32 and 33 are constituted by blades which have a sector-like profile and are keyed on the shaft 8. The moving contacts 31, 32, 33 and the fixed contacts 21, 22, 23 are arranged so that for each pair of contacts 21 and 31, 22 and 32, 23 and 33, the fixed contact lies on the rotation plane of the corresponding moving contact. Furthermore, the moving contacts 31, 32 and 33 are fixed to the shaft 8 with a relative angular position by virtue of which the moving contact 32 cannot be coupled to the fixed contact 22 when the moving contact 31 and/or the moving contact 33 are coupled to the corresponding fixed contacts 21 and 23. The disconnecting maneuver on the output terminal side occurs by turning the shaft 8; accordingly, the moving contacts 31, 32 and 33 rigidly coupled thereto couple to the corresponding fixed contacts 21, 22 and 23. In Figure 2, the moving contact 32 is coupled to the fixed contact 22, while the moving contacts 31 and 33 are uncoupled from the respective fixed contacts 21 and 23; the ground connection is therefore closed, while the output connections are open.

The operating principle of the disconnection unit 5, the various switching operations that can be performed with it, and its alternative embodiments are described in the International patent application no. PCT/EP99/07915, whose description is to be assumed included herein by reference.

The gas-insulated switchgear device thus conceived is susceptible of modifications and variations within the scope of the appended claims.

## Claims

1. A gas-insulated switchgear device, comprising at least an input bar (2) and an output bar (3) which are positioned inside two corresponding bushings (40, 41), an enclosure (1) which contains an interruption unit (4) and a disconnection unit (5) which are electrically connected to each other and, respectively, to the input bar (2) and to the output bar (3), **characterized in that** it comprises a grounding unit (200) for grounding said output bar (3), said grounding unit (200) having electrical and mechanical coupling means which are associated with the output bar (3), and contact means movable between a first position in which they are disconnected from said coupling means and the output bar (3) is energized, and a second position in which they are connected to the coupling means and the output bar (3) is grounded, said contact means being operatively controlled by actuation means which are suitable to supply the energy required for movement.

2. The switchgear device according to claim 1, **characterized in that** the grounding unit (200) is positioned inside said second bushing (41) in correspondence of its base.

3. The switchgear device according to claim 1, **characterized in that** the contact means connect with the coupling means so as to provide a substantially interlocking coupling.

4. The switchgear device according to one or more of the preceding claims, **characterized in that** said coupling means comprise a hollow seat (101) which is formed in the body of the output bar (3), said hollow seat (101) internally accommodating a pivot (102) whose head (103) is shaped for connection to said contact means.

5. The switchgear device according to claim 4, **characterized in that** the contact means comprise a conducting body (104) which has a substantially tubular shape and on the internal surface of which there is a raised portion (102) which forms an opening suitable to facilitate the passage of said shaped head (103) inside the tubular body (104) and its subsequent coupling to said tubular body (104).

6. The switchgear device according to claim 5, **characterized in that** on the outer surface of said tubular body (104) there is at least one pawl (108) which is suitable to slide in a slot (109) which has a portion provided with a curved axis and is formed in a guide (110) associated with the enclosure (1), the sliding of the pawl (108) inside the slot (109) producing a rotation of the tubular body (104) and the geometric coupling between the head (103) of the pivot (102) and the walls of the raised portion (107).

7. The switchgear device according to claim 4, **characterized in that** the contact means comprise a conducting body (104) which has a substantially tubular shape and on the inner surface of which there is a slot which has at least one portion provided with a curved axis, said slot being suitable to accommodate a pawl formed on the surface of the shaped head (103), the sliding of the pawl inside the slot producing a rotation of the tubular body (104) and its coupling to the pivot (102).

8. The switchgear device according to claim 1, **characterized in that** said coupling means comprise a hollow seat (101) which is formed in the body of the output bar (3) and inside which a threaded pivot (102) is arranged, and **in that** the contact means comprise a conducting body (104) which is substantially tubular and whose internal surface is threaded so as to screw onto the threaded pivot (102).

9. The switchgear device according to claim 1, **characterized in that** said coupling means comprise a hollow seat (101), which is formed in the body of the output bar (3), and an insulating tubular element (112) which has a first end which is fixed to the enclosure (1) and a second end which is fixed to the output bar (3) at the edges of the hollow seat (101), and **in that** the contact means comprise an elongated conducting body (114) which is suitable to slide inside the insulating tubular element (112) and enter said hollow seat (101).

10. The switchgear device according to claim 1, **characterized in that** said coupling means comprise a hollow seat (120) which is formed in the output bar (3) and has a side wall (121) and a substantially flat base (122) on which a step-shaped cavity (123) is formed, and **in that** the contact means comprise an elongated conducting body (124) which has a first end which is operatively connected to said actuation means and a second free end which has a protruding tooth (125), said conducting body (124) being suitable to rotate so that the free end couples to the side wall (121) and the protruding tooth (125) engages said step-shaped cavity (123).

11. The switchgear device according to one or more of the preceding claims, **characterized in that** on the outer surface of the conducting body (104, 114, 124) there are multiple conducting laminas which are suitable to couple electrically to the walls of the hollow seat (101, 120).

12. The switchgear device according to one or more of the preceding claims, **characterized in that** at one position in which the output bar (3) is grounded, the angle formed between the axis (130) of the conducting body (104, 114, 124) and the axis (140) of the output bar (3) is between 45° and 135°, preferably between 60° and 120°, more preferably between 80° and 100°.

13. The switchgear device according to one or more of the preceding claims, **characterized in that** the actuation means comprise an electric motor (106).

14. The switchgear device according to claims 1 and 13, **characterized in that** the grounding unit (200) is remotely controllable.

15. A gas-insulated switchgear device, comprising an input bar (2) and a first and second output bars (11, 13) which are positioned inside three corresponding bushings (40, 41, 43), an enclosure (1) which contains an interruption unit (4) and a disconnection unit (5) which are electrically connected to each other and, respectively, to the input bar (2) and to the output bars (11, 13), **characterized in that** it comprises two grounding units (200) according to one or more of the preceding claims which are operatively associated to said first and second output bars (11, 13).

## Patentansprüche

1. Gasisolierte Schaltanlage, mit zumindest einer Eingangsschiene (2) und einer Ausgangsschiene (3), die in zwei entsprechenden Buchsen (40, 41) angeordnet sind, einem Gehäuse (1), das eine Unterbrechungseinheit (4) und eine Trenneinheit (5) enthält, die miteinander und mit der Eingangsschiene (2) bzw. mit der Ausgangsschiene (3) elektrisch verbunden sind, **dadurch gekennzeichnet, daß** sie eine Erdungsvorrichtung (200) zum Erden der Ausgangsschiene (3) enthält, wobei die Erdungsvorrichtung (200) der Ausgangsschiene (3) zugeordnete elektrische und mechanische Koppelmittel sowie Kontaktmittel enthält, die zwischen einer ersten Stellung, in der sie von den Koppelmitteln getrennt sind und die Ausgangsschiene (3) spannungsführend ist, und einer zweiten Stellung, in der sie mit den Koppelmitteln verbunden sind und die Ausgangsschiene (3) geerdet ist, bewegbar sind, wobei die Kontaktmittel wirkungsmäßig durch Betätigungsmittel gesteuert sind, die dazu geeignet sind, die für die Bewegung notwendige Energie zu liefern.

2. Schaltanlage nach Anspruch 1, **dadurch gekennzeichnet, daß** die Erdungsvorrichtung (200) in der zweiten Buchse (41) an deren Basis angeordnet ist.

3. Schaltanlage nach Anspruch 1, **dadurch gekennzeichnet, daß** die Kontaktmittel eine derartige Verbindung mit den Koppelmitteln eingehen, daß sie eine im wesentliche ineinandergreifende Kopplung erzeugen.

4. Schaltanlage nach einem oder mehreren der vorhergehenden Ansprüche, **dadurch gekennzeichnet, daß** die Koppelmittel einen hohlen Sitz (101) umfassen, der in dem Körper der Ausgangsschiene (3) gebildet ist, wobei im Inneren des hohlen Sitzes (101) ein Zapfen (102) aufgenommen ist, dessen Kopf (103) für die Verbindung mit den Kontaktmitteln geformt ist.

5. Schaltanlage nach Anspruch 4, **dadurch gekennzeichnet, daß** die Kontaktmittel einen Leiterkörper (104) umfassen, der im wesentlichen rohrförmig ist und an dessen Innenseite ein erhabener Abschnitt (102) vorhanden ist, der eine Öffnung bildet, die dazu geeignet ist, den Durchgang des geformten Kopfes (103) in den rohrförmigen Körper (104) und dessen nachfolgendes Koppeln mit dem rohrförmigen Körper (104) zu ermöglichen.

6. Schaltanlage nach Anspruch 5, **dadurch gekennzeichnet, daß** auf der Außenseite des rohrförmigen Körpers (104) zumindest eine Klinke (108) vorhanden ist, die dazu geeignet ist, in einem Schlitz (109) zu gleiten, der einen Abschnitt mit einer gekrümmten Achse hat und in einer dem Gehäuse (1) zugeordneten Führung (110) ausgebildet ist, wobei die Gleitbewegung der Klinke (108) in dem Schlitz (109) eine Drehung des rohrförmigen Körpers (104) und das geometrische Koppeln zwischen dem Kopf (103) des Zapfens (102) und den Wänden des erhabenen Abschnitts (107) erzeugt.

7. Schaltanlage nach Anspruch 4, **dadurch gekennzeichnet, daß** die Kontaktmittel einen Leiterkörpers (104) umfassen, der im wesentlichen rohrförmig ist und an dessen Innenseite ein Schlitz vorhanden ist, der zumindest einen Abschnitt mit einer gekrümmten Achse hat, wobei der Schlitz dazu geeignet ist, eine an der Oberfläche des geformten Kopfes (103) ausgebildete Klinke aufzunehmen, wobei die Gleitbewegung der Klinke in dem Schlitz eine Drehung des rohrförmigen Körpers (104) und dessen Koppeln mit dem Zapfen (102) erzeugt.

8. Schaltanlage nach Anspruch 1, **dadurch gekennzeichnet, daß** die Koppelmittel einen hohlen Sitz (101) umfassen, der in dem Körper der Ausgangsschiene (3) gebildet ist und in dem ein Gewindezapfen (102) angeordnet ist, und daß die Kontaktmittel einen Leiterkörper (104) umfassen, der im wesentlichen rohrförmig ist und dessen Innenseite zum Schrauben auf den Gewindezapfen (102) mit einem Gewinde versehen ist.

9. Schaltanlage nach Anspruch 1, **dadurch gekennzeichnet, daß** die Koppelmittel einen hohlen Sitz (101), der in dem Körper der Ausgangsschiene (3) gebildet ist, und ein Isolierelement (112) umfassen, das ein erstes Ende, das an dem Gehäuse (1) befestigt ist, und ein zweites Ende hat, das an der Ausgangsschiene (3) an den Kanten des hohlen Sitzes (101) befestigt ist, und daß die Kontaktmittel einen länglichen Leiterkörper (114) umfassen, der dazu geeignet ist, in dem rohrförmigen Isolierelement (112) zu gleiten und in den hohlen Sitz (101) einzutreten.

10. Schaltanlage nach Anspruch 1, **dadurch gekennzeichnet, daß** die Koppelmittel einen hohlen Sitz (120) umfassen, der in der Ausgangsschiene (3) gebildet ist und eine Seitenwand (121) und eine im wesentlichen ebene Basis (122) hat, an der eine stufenförmige Aushöhlung (123) ausgebildet ist, und daß die Kontaktmittel einen länglichen Leiterkörper (124) umfassen, der ein wirkungsmäßig mit den Betätigungsmitteln verbundenes erstes Ende und ein zweites, freies Ende mit einem vorstehenden Zahn (125) hat, wobei der Leiterkörper (124) dazu geeignet ist, sich so zu drehen, daß das freie Ende mit der Seitenwand (121) koppelt und der vorstehende Zahn (125) in die stufenförmige Aushöhlung (123) eingreift.

11. Schaltanlage nach einem oder mehreren der vorhergehenden Ansprüche, **dadurch gekennzeichnet, daß** auf der Außenseite des Leiterkörpers (104, 114, 124) mehrere leitende Plättchen vorhanden sind, die dazu geeignet sind, mit den Wänden des hohlen Sitzes (101, 120) elektrisch zu koppeln.

12. Schaltanlage nach einem oder mehreren der vorhergehenden Ansprüche, **dadurch gekennzeichnet, daß** an einer Position, an der die Ausgangsschiene (3) geerdet ist, der Winkel zwischen der Achse (130) des Leiterkörpers (104, 114, 124) und der Achse (140) der Ausgangsschiene (3) zwischen 45° und 135°, vorzugsweise zwischen 60° und 120°, insbesondere zwischen 80° und 100° liegt.

13. Schaltanlage nach einem oder mehreren der vorhergehenden Ansprüche, **dadurch gekennzeichnet, daß** die Betätigungsmittel einen Elektromotor (106) umfassen.

14. Schaltanlage nach den Ansprüchen 1 und 13, **dadurch gekennzeichnet, daß** die Erdungsvorrichtung (200) femsteuerbar ist.

15. Gasisolierte Schaltanlage, mit einer Eingangsschiene (2) und einer ersten und einer zweiten Ausgangsschiene (11, 13), die in drei entsprechenden Buchsen (40, 41, 43) aufgenommen sind, einem Gehäuse (1), das eine Unterbrechungseinheit (4) und eine Trenneinheit (5) enthält, die miteinander und mit der Eingangsschiene (2) bzw. mit den Ausgangsschienen (11, 13) elektrisch verbunden sind, **dadurch gekennzeichnet, daß** sie zwei Erdungsvorrichtungen (200) gemäß einem oder mehreren der vorhergehenden Ansprüche enthält, die wirkungsmäßig der ersten und der zweiten Ausgangsschiene (11, 13) zugeordnet sind.

## Revendications

1. Mécanisme de manoeuvre isolé au gaz comprenant au moins une barre d'entrée (2) et une barre de sortie (3) qui sont positionnées à l'intérieur de deux douilles correspondantes (40, 41), une enceinte (1) qui contient une unité d'interruption (4) et une unité de déconnexion (5) qui sont connectées électriquement l'une à l'autre et, respectivement, à la barre d'entrée (2) et à la barre de sortie (3), **caractérisé en ce qu'**il comprend une unité de mise à la terre (200) pour mettre à la terre ladite barre de sortie (3), ladite unité de mise à la terre (200) ayant des moyens de couplage électriques et mécaniques qui sont associés à la barre de sortie (3), et des moyens de contact mobiles entre une première position, dans laquelle ils sont déconnectés desdits moyens de couplage et la barre de sortie (3) est excitée, et une seconde position, dans laquelle ils sont connectés aux moyens de couplage et la barre de sortie (3) est mise à la terre, lesdits moyens de contact étant commandés en service par des moyens d'actionnement qui sont appropriés pour fournir l'énergie requise pour le mouvement.

2. Mécanisme de manoeuvre selon la revendication 1, **caractérisé en ce que** l'unité de mise à la terre (200) est positionnée à l'intérieur de ladite seconde douille (41) en correspondance avec sa base.

3. Mécanisme de manoeuvre selon la revendication 1, **caractérisé en ce que** les moyens de contact se connectent aux moyens de couplage de manière à assurer un couplage sensiblement emboîté.

4. Mécanisme de manoeuvre selon une ou plusieurs des revendications précédentes, **caractérisé en ce que** lesdits moyens de couplage comprennent un siège creux (101) qui est formé dans le corps de la barre de sortie (3), ledit siège creux (101) abritant à l'intérieur un pivot (102) dont la tête (103) est moulée pour une connexion auxdits moyens de contact.

5. Mécanisme de manoeuvre selon la revendication 4, **caractérisé en ce que** les moyens de contact comprennent un corps conducteur (104) qui a une forme sensiblement tubulaire sur la surface et sur la surface interne duquel se trouve une partie dressée (102) qui forme une ouverture appropriée pour faciliter le passage de ladite tête moulée (103) à l'intérieur du corps tubulaire (104) et son couplage ultérieur audit corps tubulaire (104).

6. Mécanisme de manoeuvre selon la revendication 5, **caractérisé en ce que**, sur la surface externe dudit corps tubulaire (104), se trouve au moins un cliquet (108) qui est approprié pour coulisser dans une fente (109) qui a une partie munie d'un axe incurvé et est ménagée dans un guide (110) associé à l'enceinte (1), le coulissement du cliquet (108) à l'intérieur de la fente (109) produisant une rotation du corps tubulaire (104) et le couplage géométrique entre la tête (103) du pivot (102) et les parois de la partie dressée (107).

7. Mécanisme de manoeuvre selon la revendication 4, **caractérisé en ce que** les moyens de contact comprennent un corps conducteur (104) qui a une forme sensiblement tubulaire et sur la surface interne duquel est ménagée une fente qui a au moins une partie munie d'un axe incurvé, ladite fente étant appropriée pour abriter un cliquet formé sur la surface de la tête moulée (103), le coulissement du cliquet à l'intérieur de la fente produisant une rotation du corps tubulaire (104) et son couplage avec le pivot (102).

8. Mécanisme de manoeuvre selon la revendication 1, **caractérisé en ce que** les moyens de couplage comprennent un siège creux (101) qui est formé dans le corps de la barre de sortie (3) et à l'intérieur duquel un pivot fileté (102) est agencé et **en ce que** les moyens de contact comprennent un corps conducteur (104) qui est sensiblement tubulaire et dont la surface interne est filetée de manière à se visser sur le pivot fileté (102).

9. Mécanisme de manoeuvre selon la revendication 1, **caractérisé en ce que** lesdits moyens de couplage comprennent un siège creux (101), qui est formé dans le corps de la barre de sortie (3), et un élément tubulaire isolant (112) qui a une première extrémité qui est fixée à l'enceinte (1) et une seconde extrémité qui est fixée à la barre de sortie (3) sur les bords du siège creux (101), et **en ce que** les moyens de contact comprennent un corps conducteur allongé (114) qui est approprié pour coulisser à l'intérieur de l'élément tubulaire isolant (112) et entrer dans ledit siège creux (101).

10. Mécanisme de manoeuvre selon la revendication 1, **caractérisé en ce que** lesdits moyens de couplage comprennent un siège creux (120) qui est formé dans la barre de sortie (3) et a une paroi latérale (121) et une base sensiblement plate (122) sur laquelle est ménagée une cavité en forme de gradin (123) et **en ce que** les moyens de contact comprennent un corps conducteur allongé (124) qui a une première extrémité qui est connectée en service auxdits moyens d'actionnement et une seconde extrémité libre qui a une dent saillante (125), ledit corps conducteur (124) étant approprié pour tourner de sorte que l'extrémité libre se couple à la paroi latérale (121) et que la dent saillante (125) vienne en prise avec ladite cavité en forme de gradin (123).

11. Mécanisme de manoeuvre selon une ou plusieurs des revendications précédentes, **caractérisé en ce que**, sur la surface externe du corps conducteur (104, 114, 124) se trouvent de multiples lamelles conductrices qui sont appropriées pour se coupler électriquement aux parois du siège creux (101, 120).

12. Mécanisme de manoeuvre selon une ou plusieurs des revendications précédentes, **caractérisé en ce que**, dans une position dans laquelle la barre de sortie (3) est mise à la terre, l'angle formé entre l'axe (130) du corps conducteur (104, 114, 124) et l'axe (140) de la barre de sortie (3) est de 45° à 135°, de préférence de 60° à 120°, mieux encore de 80° à 100°.

13. Mécanisme de manoeuvre selon une ou plusieurs des revendications précédentes, **caractérisé en ce que** les moyens d'actionnement comprennent un moteur électrique (106).

14. Mécanisme de manoeuvre selon les revendications 1 et 13, **caractérisé en ce que** l'unité de mise à la terre (200) peut être commandée à distance.

15. Mécanisme de manoeuvre isolé au gaz, comprenant une barre d'entrée (2) et une première et une seconde barres de sortie (11, 13) qui sont positionnées à l'intérieur de trois douilles correspondantes (40, 41, 43), une enceinte (1) qui contient une unité d'interruption (4) et une unité de déconnexion (5) qui sont connectées électriquement l'une à l'autre et, respectivement, à la barre d'entrée (2) et aux barres de sortie (11, 13), **caractérisé en ce qu'**il comprend deux unités de mise à la terre (200) selon une ou plusieurs des revendications précédentes, qui sont associées en service auxdites première et seconde barres de sortie (11, 13).
